# EUROPEAN PATENT SPECIFICATION

(11) **EP 2 773 225 B1**
(45) Date of publication and mention of the grant of the patent: **30.11.2016**
(21) Application number: 12783183.2
(22) Date of filing: 29.10.2012
(51) Int. Cl.: A23L 23/10, A23L 5/00, A23L 29/212, A23L 27/40, A23L 27/00

(54) **SHAPED FOOD CONCENTRATE**
GEFORMTES NAHRUNGSMITTELKONZENTRAT
CONCENTRÉ ALIMENTAIRE FORMÉ

(30) Priority: 04.11.2011 EP 11187894
(43) Date of publication of application: 10.09.2014
(73) Proprietor: Unilever N.V., 3013 AL Rotterdam (NL); Unilever PLC, London, Greater London EC4Y 0DY (GB)
(72) Inventor: ACHTERKAMP, Georg, Singapore 117439 (SG)
(74) Representative: Reijns, Tiemen Geert Pieter
(86) International application number: PCT/EP2012/071347
(87) International publication number: WO 2013/064449

(56) References cited:
- EP-A1- 1 366 674
- WO-A1-2007/068402
- WO-A1-2008/151854
- WO-A1-2011/076528
- US-A1- 2010 240 775
- GUPTA S ET AL: "Bouillon cube process design by applying product driven process synthesis", CHEMICAL ENGINEERING AND PROCESSING, ELSEVIER SEQUOIA, LAUSANNE, CH, vol. 50, no. 1, 22 October 2010 (2010-10-22), pages 9-15, XP028133552, ISSN: 0255-2701, DOI: 10.1016/J.CEP.2010.10.008 [retrieved on 2010-11-02]

## Description

### Field of the invention

The present invention relates to a shaped food concentrate for the use as bouillon, seasoning, soup or gravy and process of preparation thereof. It particularly relates to seasoning or bouillon cubes.

### Background of the invention

A bouillon or seasoning cube is a product widely used as a concentrate to prepare a bouillon, a broth or a soup. The bouillon concentrate is normally added to a hot aqueous solution, allowing it to dissolve. In addition, a bouillon cube may be used when preparing other dishes, as a seasoning product. Such seasoning cubes are preferably added to a dish or food by crumbling.

A typical bouillon cube comprises salts, taste enhancing compounds like monosodium glutamate (MSG), sugars, starch (like flour), fat, flavouring components like vegetables, meat extracts, spices, and colorants. The amounts of the respective compounds may vary depending on the specific purpose of the product, the market or taste of the consumer that is aimed at.

In general two types of bouillon cubes can be distinguished in the art, the pressed and the extruded type. Pressed cube are typically pressed from powder, resulting in a relatively hard and dense cube by a rotating press, as commercially available from e.g. Bonals (trademark). In the pressed cube, the fat typically forms the dispersed phase. A specific form of pressing is roller compacting. In this technique the powder is pressed and compacted between two counter-rotating rolls. In the context of this invention, roller compacted cubes are included in the category of pressed cubes. The extruded cube, which is softer and where fat typically forms the continuous phase, is typically but not necessarily prepared by extruding a pasty mass in commercially available machines from e.g. Corazza or Benhill (trademarks). In order to shape the bouillon concentrate into a relatively quick dissolving stable cube by compression or extrusion, a binding compound is highly advantageous. In most cases, a certain amount of fat is used for this purpose, with the fat forming a dispersed phase for pressed cubes and continuous phase for extruded cubes. Shaping towards the pasty cube, using extrusion, in general comprises a higher fat content than using compression. Hence, extruded cubes in general have a higher fat content than pressed cubes.

Consumers are increasingly becoming aware of negative effects of fats in diet and low fat food products are increasingly being preferred by consumers. However, reducing fat contents is difficult as cube become too hard to dissolve or crumble or other components such as Glycerol need to be used to replace the fat which are not perceived as being natural by consumers.

Apart from cubes, gel-type bouillon have also been disclosed in the art, e.g. in WO2008/151854. The gel type cubes disclosed herein comprise only a low amount of fat and the continuous phase is water, but they typically require a special packaging.

WO2011/076528 discloses a packaged savoury food concentrate in the form of a gel, for preparing a bouillon, a soup, a sauce, a gravy or a seasoning comprising: -a gelling system, -a liquid phase comprising a liquid polyol, -from 3 percent wt to 30 percent wt of salt, based on the weight of the total food concentrate, wherein the liquid polyol is present in an amount of from 0.1 wt percent to 80 wt percent, based on the total weight of the food concentrate.

WO2007/068402 discloses Packaged concentrates in jelly form for preparing a bouillon, broth, soup, sauce, gravy or for use as a seasoning, which concentrates comprises 20-80 percent water, 0.5-60 percent taste imparting components, 15-30 percent salt, and a gelling agent comprising xanthan and locust bean gum, in the absence of 0.5-60 percent by weight of herbs, vegetables, fruits, meat, fish, crustaceans, or particulates thereof.

More conventional low fat bouillon cubes have been disclosed in e.g. JP61-166386, disclosing soup cubes made of freeze dried powder, which is a very expensive process. Similar cubes are disclosed in JP11-127823 and JP2006-042720.

Thus, a low-fat pressed or extruded bouillon cube that maintains its shape and is easier to manufacture, remains to be desired.

A reduction in fat contents has a negative impact on processing, particularly of pressed cubes. The conventional process for pressed cubes involves steps of mixing of dry ingredients with fat to prepare a premix, typically followed by maturation time of 2-5 hours, whereupon the premix is further ground to a free flowing powder followed by passing through rotary tablet press to form pressed cubes. It is desirable to reduce the maturation time in order to improve the processing efficiency for pressed cubes.

Accordingly, it is an object of the present invention to provide a low-fat food concentrate composition.

It is another object of the present invention to provide a low-fat food concentrate composition with a relatively low fat content and yet having acceptable texture, mouth feel, appearance or taste, when dissolved.

It is also an object of the invention that the food concentrate when dissolved in water does not show a large fat-eye.

It is another object of the invention that the food concentrate can be pressed to form a shaped food concentrate cube.

It is another object of the invention that the food concentrate can be extruded to form a shaped food concentrate cube.

Another object of the present invention is to provide a shaped food concentrate cube with low fat content and yet having low water activity of < 0.75.

Another object of the present invention is to provide seasoning cubes with relatively low fat content that can be processed easily.

A further object of the present invention is to provide a process for preparing seasoning cubes with relatively low fat content, particularly for preparing pressed cubes that reduces or eliminates the requirement of maturation time.

The present inventors have surprisingly found that a stable low-fat shaped food concentrate may be obtained by replacing fatty matter in the food concentrated by gelatinized starch.

### Summary of the invention

Accordingly, the present invention provides a shaped solid food concentrate comprising 35-85% by weight crystalline ingredients composed of at least one of salt, monosodium glutamate and sugar, 0.1-10% by weight gelatinized starch, 0.2-20% by weight water; and 0-50% by weight of taste imparting components, wherein the shaped solid food concentrate is in the form of a pressed cube, comprising 1-6% by weight solid fat or an extruded or pasty cubes comprising 3-12% by weight solid fat.

In a second aspect the invention provides a process for preparation of the shaped food concentrate according to any one of the preceding claims, comprising the steps of mixing 35-85 parts weight crystalline ingredients composed of at least one of salt, monosodium glutamate and sugar with 0-12 parts solid fat to prepare a premix, then alternatively adding 0.2-10 parts by weight gelatinized starch to 0.2-20 parts by weight water, or adding 0.2-10 parts of ungelatinized starch to 0.5-20 parts water and heating at a temperature above 70°C to prepare a starch gel and cool the gel, followed by optionally subjecting the starch gel to a further step of mixing to optimize the texture for further processing, mixing the premix with the starch gel to obtain a mixture and shaping the mixture to obtain a shaped food concentrate wherein the shaping step includes roller compacting of the mixture to obtain pressed cubes or extrusion of the mixture to obtain pasty cubes.

For the avoidance of doubt, the term shaped food concentrate, bouillon cube and seasoning cube as used herein include pressed cubes as well as extruded cubes.

By low-fat is meant a fat level for extruded cubes of 0-15% by weight, where common cubes contain around 18-25% by weight; and for pressed cubes 0-5% by weight, where common cubes typically contain 6-12% by weight.

The term solid fat as used herein means fat having melting point greater than 20 °C.

The term liquid fat as used herein means fat having melting point less than or equal to 20 °C

The usage of the term "cube" is indicative of common usage in the field without being restrictive in terms of a specific geometric shape, and relates to all shapes and forms of the shaped food concentrate of the present invention. The term cube includes the form of a bar, block, brick, cylinder, pyramid, tetrahedron, cone, frustum of a cone, ball or other three-dimensional (regular or irregular) shapes. The term "cube" as used herein is thus meant to include non-cube geometric shapes.

These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

Thus, the invention provides a shaped solid food concentrate comprising crystalline ingredients composed of at least one of salt, monosodium glutamate and sugar, gelatinized starch, water and taste imparting components.

### The shaped food concentrate

The shaped food concentrate is solid at room temperature. Preferably the shaped food concentrate is for a bouillon, broth, gravy or a sauce or for use as a seasoning which can be added to other products to provide a flavour or a seasoning. Preferably, the shaped food concentrate, upon dilution with water, typically hot water, optionally with stirring, forms a bouillon, broth, gravy or a sauce. Preferably the shaped food concentrate is a bouillon cube. In one preferred embodiment the shaped food concentrate is a pressed bouillon cube. In an alternate preferred embodiment, the shaped food concentrate is an extruded bouillon cube.

As a consumer cooking aid, the shaped food concentrate typically has a mass of between 1 and 50 g, preferably at least 2 g, more preferably at least 5 g, but preferably not more than 40 g, more preferably not more than 30 g, or even not more than 20 g.

### Crystalline ingredients

The shaped food concentrate comprises at least 35% by weight of the food concentrate, preferably at least 50% by weight, and less than 85% by weight, preferably less than 75% by weight of crystalline ingredients comprising at least one of salt, monosodium glutamate and sugar.

### Gelatinized Starch

The term gelatinized starch, as used herein is commonly known to the skilled person and means starch exposed to temperature greater than 70 °C for a period long enough to cause gelatinisation, typically at least 30 sec in presence of water. The temperature of cooking is preferably less than 120 °C, more preferably less than 110 °C, or even less than 100°C. The temperature of cooking is preferably greater than 80 °C and more preferably greater than 90 °C. It is not excluded from the scope of invention that in some embodiments the starch may be gelatinized in-situ, i.e. an ungelatinized starch that is gelatinized in situ during the processing of the compositions. The term gelatinized starch is also meant to include pregelatinized starches.

Preferred gelatinised starches are potato, corn, and tapioca starch, wherein tapioca starch shows the best results.

The shaped food concentrate preferably comprises 0.1% to 10% by weight of gelatinised starch, preferably at least 0.2%, more preferably at least 0.4%, or even at least 1%, but preferably not more than 8%, still more preferably not more than 6%, even more preferably not more than 5%, or even not more than 4% by weight of the food concentrate.

### Water

The shaped food concentrate comprises 0.2-20% by weight water.

The water is typically present in a concentration of at least 0.5%, more preferably more than 1%, still more preferably more than 3%, but typically not more than 10%, more preferably not more than 8%, still more preferably not more than 5% of the food concentrate.

### Water to gelatinised starch ratio

The ratio of water to gelatinized starch is preferably from 1.5:1 to 5:1, more preferably 2:1 to 5:1 in the shaped food concentrate. Without wishing to be limited by any theory it is believed that at relatively higher ratios the concentrate is found to be too liquid and does not have a consistency comparable to fat.

Particularly preferred for forming a stable shaped food concentrate, is a concentrate comprising 1-10% by weight gelatinized starch and 2-20% water wherein water and gelatinized starch form a continuous phase for soft cubes and the dispersed phase for pressed cubes. The water and gelatinised starch mix as a continuous phase makes the cubes soft and extrudable, while it provides sufficient binding properties to press and crumble the cube afterwards when used as dispersed phase in pressed cubes.

### Taste imparting ingredients and fillers

The composition further optionally comprises taste imparting ingredients and filling materials, also referred to as additional ingredients herein below.

The shaped food concentrate typically comprises at least 5% by weight and less than 50% by weight of taste imparting ingredients and fillers.

The additional ingredients include, but are not limited to: solid fat and liquid fat of vegetable or animal origin, herbs and spices, flavours, meat powders or extracts, and other fillers and starches.

More particularly the additional ingredients may be selected from starch, flour (which may contain starch), herbs, including herb powders, such as e.g. garlic powder or red bell pepper powder, concentrates and extracts of herbs, and further spices, including powders, concentrates and extracts of spices, and further (powdered) meat extracts, like e.g. chicken, pork or beef, flavours, flavouring oils, vegetable extracts and/or colouring agents. In the present application, "starch" excludes gelatinized starch and is intended also to comprise maltodextrin, as a type of starch.

### Fillers and other starch

Fillers and starches may be any commercially available fillers and other starches as used in shaped food concentrates. For the avoidance of doubt the other starches exclude gelatinised starches, and are present in the concentrate in non-gelatinised form.

Typical examples of fillers and starches include native potato starch, corn starch, tapioca starch, rice starch, maltodextrines of different origins, lactose, flours of different origin e.g. wheat, rice, fibres/brans of different origin e.g. rice bran, wheat bran.

The fillers and starches are typically present in the concentrate in a concentration of 0-15% by weight of the composition, preferably at least 1%, more preferably at least 3%, or even at least 5% by weight, but generally less than 12%, more preferably less than 10%, or even less than 8% by weight of the food concentrate.

### Herbs and spices

Dried herbs and spices are typically added the meet the consumers taste requirements. Typically the shaped concentrate comprises as herbs: dried parsley, dill, chive and/or coriander. Typically the shaped concentrate comprises as spices: pepper, garlic, celery seed, fennel seed and coriander seed. Typically the shaped concentrate comprises as vegetables: for taste and garnish: dried vegetables, including e.g. onions, carrots, bell pepper, spinach and/or leek.

The herbs and spices are typically present in a concentration of 0-10% by weight of the composition, preferably at least 1%, or even at least 2%, while the composition preferably comprises less than 8%, or even less than 6% of the food concentrate.

### Flavours

Flavouring ingredients may also be used in the concentrate, including natural, natural identical or artificial flavours as powder, pasty or liquid format; typically in a concentration of between 0-5%, more preferably 0.5-4% or even 1-3% by weight of the food concentrate.

### Meat powders and extracts

Food concentrates, such as bouillon cubes, often comprise meat powders and extracts. The concentrate according to the invention may comprise 0-5% by weight, more preferably 0.1 %-3% by weight, or even 0.5%-2% by weight of dried meat powder. The concentrate according to the invention may comprise 0-5% by weight, more preferably 0.1 %-3% by weight, or even 0.5%-2% by weight of a liquid or pasty meat extract.

Alternatively, the composition may comprise yeast extracts as taste enhancers as well as replacement of meat extract to deliver a broth like taste. The concentrate according to the invention may comprise 0-5% by weight, more preferably 0.1%-3% by weight, or even 0.5%-2% by weight of yeast extracts:

### Solid and liquid fat

Although the purpose of the invention is to prepare a low-fat or even no-fat product, small amounts of fat are often appreciated by the consumer for taste reasons.

The solid and liquid fat may be of animal or vegetable origin.

The shaped food concentrate may comprise 0-12% by weight solid fat. The solid fat is typically either a solid vegetable fat such as palm fat or a solid animal fat from animals such as pork, chicken, and/or beef.

The concentration of solid fat is preferably less than 10%, more preferably less than 8% or even less than 5%, but may be more than 1%, or even more than 2% by weight of the composition.

The shaped food concentrate preferably comprises liquid fat. Preferred liquid fat typically includes vegetable oils such as olive oil and also liquid fats from animal sources such as chicken fat.

The concentration of liquid fat in the shaped food concentrate is preferably less than 5%, more preferably less than 4% or even less than 3%, but may be more than 0.1 %, or even more than 0.5%, or even more than 1%, by weight of the composition.

### Pressed cubes

The shaped food concentrate comprises 1-6% solid fat when in the form of pressed cubes. Although the shaped solid composition may comprise up to 6% by weight fat when in form of pressed cubes, compositions comprising relatively less solid fat are particularly preferred. Accordingly, the shaped food concentrate in form of pressed cubes comprises less than 5% more preferably less than 3% and most preferably less than 1% by weight solid fat. It is particularly preferred that the shaped food concentrate when in form of pressed cube comprises less than 0.5% by weight fat.

### Pasty or extruded cubes

The shaped food concentrate comprises 3-12% by weight solid fat when in the form of pasty or extruded cubes. In particular, when the shaped food concentrate is in form of pasty cubes, it comprises preferably 3-12%, more preferably 5-10%, most preferably 6-9% by weight solid fat.

### The process

The process of preparing a food concentrate according to the invention, typically includes making the starch gel (fat replacer) by cooking starch and water, followed by cooling down the gel for 3-20 hrs and mixing it. Separately, the dry ingredients e.g. crystals, fillers etc are mixed followed by the addition of other liquid ingredients and fat. Then the starch fat replacer is added to the mixed dry and liquid ingredients, before adding optional herbs, spices and vegetable pieces. Finally the concentrate is shaped.

According to one aspect of the invention there is provided a process for preparation of the shaped food concentrate comprising the steps of:
a. Mixing 35-85 parts weight crystalline ingredients composed of at least one of salt, monosodium glutamate and sugar with 0-12 parts solid fat to prepare a premix;
a. Adding 0.2-10 parts by weight of pre-gelatinized starch to 0.5-20 parts by weight water, or adding 0.2-10 parts of ungelatinized starch to 0.5-20 parts water and heating at a temperature above 70°C to prepare a starch gel; and then chilled for starch gel setting;
b. Optionally subjecting the starch gel to a further step of mixing;
c. Mixing the premix with the starch gel to obtain a mixture; and
d. Shaping the mixture to obtain a shaped food concentrate;
wherein the shaping step includes roller compacting of the mixture to obtain pressed cubes or extrusion of the mixture to obtain pasty cubes.

### Step (a)

The mixing may be carried out in any mixer known in the art. In the step (a), when the composition comprises solid fat, the solid fat is preferably molten before mixing. To this end, the solid fat (when used) may typically be molten by heating to a temperature in the range of 40-80 °C, preferably above 40°C. In a preferred aspect, molten solid fat and liquid fat (when present) may be added to the non-crystalline ingredients by spraying onto the non-crystalline ingredients. This may be done by e.g. heat tracing.

Elimination and/or reduction of maturation time increases the effective production capacity and reduces costs.

### Step (b)

Step (b) may be carried out with pre-gelatinised starch, or gelatinisation maybe done in-situ starting from un-gelatinised starch.

When the step (b) is carried out adding 0.2-10 parts of un-gelatinised starch to 0.5-20 parts water and heating at a temperature above 70 °C to prepare a starch gel, the temperature is preferably in the range of 70-120°C, more preferably 70-100 °C. The step (b) is preferably carried in a double jacket cooking vessel. The cooling down is typically done at a temperature of less than 50°C. Depending on the batch size, the cooling may take between 1 and 20 hrs, typically 3-20 hrs.

### Step (c)

According to a preferred aspect the process comprises the step (c) of subjected the starch gel to a further step of mixing in order to obtain a non-lumpy and uniform texture.

### Step (d)

The step (d) comprises the step of mixing the premix obtained in the step (a) or a premix subjected to granulation during the step (a) or followed by the step (a), with the starch gel to obtain a mixture.

### Step (e)

The shaping of the step (e) may be carried out by any process known in the art including pressing, extrusion, roller compaction, cutting or sheeting, or a possible combination of them.

The step (e) of shaping is preferably carried out by extruding or by pressing the mixture obtained in the step (d).

### Extrusion

In one preferred aspect of the present invention the shaping in step (e) of the process is performed by extrusion. Extruded cubes are prepared by compacting a portion of product in the form of a paste in a mould that is open at one side. Pressure is only applied to press the product against the mould and shape the cube. Pressure is not applied to actually connect the product, as this is already a homogenous mass. Suitably, an apparatus from Corazzas or Benhills (trademarks) is used to prepare extruded cubes.

### Pasty cubes.

The mixing for preparing the the pasty mass as mentioned before, while the shaping step is typically done by adding the mass will be added a feeding hopper, from where it is transferred by a feeding screw to a piston filler. The piston filler then presses the mass through a nozzle into a mould which has been laid out with a foil before filling. After extrusion into the foil, the machine typically folds the foil to close the pack.

### Pressing

In an alternate preferred aspect of the present invention the shaping in step (e) of the process is performed by pressing. In this way a solid product is obtained, e.g. in the form of a tablet or a cube. Pressing preferably is carried out by a standard process as known in the art, by using a mould, such as e.g. an apparatus from Bonals or Kilian (all trademarks). Pressed cubes or tablets are preferably shaped by pressing a portion of product in the form of a powder in a mould that is closed at all sides. Applying high pressure to the powder in the mould results in the cube or tablet form. Suitably, the machine used is from Bonals (trademark).

Preparing pressed cubes may be done with a roller compacting method or by compacting via a rotating cube/tablet press of the mixture, as commonly known in the art.

### Examples

The invention will be now demonstrated by means of the following non-limiting Examples.

### Measurement methods

Moisture content (%) was measured by using Moisture analyzer - Model :HB43-S Halogen (ex Mettler-Toledo)
Water Activity was measured by using Aw analyzer - Model AwCX3TE (ex Charpa Techcenter)

Fat eye formation was visually observed by following the procedure given below:
1. dissolve the sample in hot water 80-95 C as serving unit ratio
2. stir to homogeneous the solution and leave them for 10-15 min
3. visual check as amount and size of fat eye forming on the surface of solution.
4. leave them for 3-5hours or overnight at room temperature the fat eye will be form to solid oil and floating on solution surface, then re-visual as amount, size and thickness of fat eye forming on the surface of solution again.

### Example 1: Beef cubes

The mix was prepared as follows:
a. Making the starch gel/ fat replacer first by cooking starch and water in a double jacket vessel, followed by cooling down the gel for 3-20h and mixing it up.
b. Mixing the dry ingredients e.g. crystals, filler as defined below, and adding any other liquid ingredients and fat.
c. Adding the starch fat replacer and mixing.
d. Adding the herbs and vegetable pieces as garnish.
e. Shaping.

Ingredients: Common Salt (40%), monosodium glutamate (20%), sugar (3%), yeast powder (1.8%), beef flavour mix (7.6%), flavour enhancers (1%), herbs (1.2%), spice mix (1.4%), and rendered cattle fat liquid (4%).

The examples further contain different levels of gelatinized starch, fat and water as tabulated below (in % by weight).

Examples compositions 1 to 5 are according to the invention. Comparative example A does not contain gelatinised starch.

| Ingredient | Comp. Ex A | Ex 1 | Ex 2 | Ex 3 | Ex 4 | Ex 5 |
|---|---|---|---|---|---|---|
| Tapioca Flour (ungelatinized) | 0.9 | 0.9 | 5.9 | 5.9 | 5.9 | 0.9 |
| HPO 50 fat TFA FREE ^{**)} | 18 | 8 | 8 | 8 | 8 | - |
| Gelatinized starch | - | 2.5 | 1.2 | 1.5 | 1.8 | 9 |
| Gelatinized starch type | - | Potato starch | Potato starch | corn starch | R9447 starch ^{*)} | Tapioca starch |
| Water | 0.9 | 8.4 | 4.7 | 4.4 | 4.1 | 9.9 |
| Ratio of water to gelatinized starch | 0 | 3.4 | 3.9 | 2.9 | 2.3 | 0.91 |

| | | | | | | |
|---|---|---|---|---|---|---|
| *) ex National Starch **) hydrogenated palm oil (HPO), free of trans fatty acid (TFA) | | | | | | |

The cubes were packed within 1 hr after mixing, thus without maturation

The results are for the above example compositions are given in the table below. The shaped food concentrates (i.c. bouillon cubes) are tested for the texture, moisture content, water activity and fat eye size.

| | Comp Ex A | Ex 1 | Ex 2 | Ex 3 | Ex 4 | Ex 5 |
|---|---|---|---|---|---|---|
| Texture | Good | Acceptable | Acceptable | Acceptable | Good | Acceptable |
| % Moisture content | | | | | | 6.52 |
| Water activity | 0.549 | 0.668 | 0.623 | 0.597 | n.d. | 0.676 |
| Fat Eye | Large | Small | Small | Small | Small | None |

It can be seen from the above table that the shaped food concentrates of the present invention have relatively small fat eye, acceptable water activity and acceptable texture, even though they contains less fat that regular cubes as represented by comparative example Comp Ex A.

Furthermore, it can be seen that when the ratio of water to the gelatinized starch is relatively small (Ex 5) the fat eye is drastically reduced/ eliminated. It is noted that example Ex5 contains 4% of liquid fat, whereas Ex 1-4 contain 12 % (8% HPO + 4% rendered cattle fat liquid).

The large fat eye in the comparative example was found to be a drawback for the panellists.

### Example 2: Chicken Cubes

The chicken cubes are prepared in the same way as example 1, and had the following composition: common Salt (47.8%), sugar (18.9%), flavour mix (2.0%) sea yeast mix (19.5%), herbs (0.7%), flavour enhancer (0.4%), spices (0.7%).

The concentrate further contains different levels of gelatinized starch, fat and water as tabulated below (in % by weight).

| Ingredient | Comp Ex B | Ex 6 | Ex 7 | Ex 8 | Ex 9 | Ex 10 |
|---|---|---|---|---|---|---|
| Powdered vegetable fat | 8.8 | - | - | - | - | - |
| Sunflower oil | 1.2 | 1.2 | 1.2 | 1.2 | - | - |
| Gelatinized starch | - | 2.2 | 3.1 | 4.4 | 5 | 3.5 |
| Gelatinized starch type | - | Potato starch | Potato + Tapioca starch 50:50 | Tapioca starch | Tapioca starch | Tapioca starch |
| Water | - | 6.6 | 5.7 | 4.4 | 5 | 6.5 |
| Ratio of water to gelatinized starch | - | 3 | 1.84 | 1 | 1 | 1.9 |

The cubes were packed within 1 hr after mixing, thus without maturation

The results are given in the table below. The shaped food concentrates (i.c. bouillon cubes) are tested for the texture, moisture content, water activity and fat eye size.

| Ingredient | Comp Ex B | Ex 6 | Ex 7 | Ex 8 | Ex 9 | Ex 10 |
|---|---|---|---|---|---|---|
| Texture | Good | Acceptable | Acceptable | Good | Good | Good |
| Water activity | 0.432 | 0.612 | 0.61 | 0.616 | 0.556 | 0.562 |
| % Moisture | 1.39 | 2.025 | 2.975 | 3.15 | 1.36 | 3.42 |
| Fat Eye | small | None | None | None | None | None |

It can be seen from the above table that the shaped food concentrates of the present invention have no fat eye, acceptable water activity and acceptable texture, even though they contain less fat than regular cubes as represented by comparative example Comp Ex B.

Furthermore, it can be seen that all low-fat gelatinized starch cubes there is no fat eye. The large fat eye in the comparative example was found to be a drawback for the panellists.

From the examples above it can be seen that the shaped food concentrate according to the invention has relatively low fat content, acceptable organoleptic and visual-tactile (texture) properties and yet has relatively low water activity and can be processed easily and without maturation.

## Claims

1. A shaped solid food concentrate comprising:
a. 35-85% by weight crystalline ingredients composed of at least one of salt, monosodium glutamate and sugar;
b. 0.1-10% by weight gelatinized starch;
c. 0.2-20% by weight water; and
d. 0-50% by weight of taste imparting components;
wherein the shaped solid food concentrate is in the form of a pressed cube, comprising 1-6% by weight solid fat or an extruded or pasty cubes comprising 3-12% by weight solid fat.

2. A shaped food concentrate according to claim 1 comprising 1-10% by weight gelatinized starch and 2-20% water wherein water and gelatinized starch form a continuous phase.

3. A shaped food concentrate according to any one of the preceding claims, wherein ratio of water to gelatinized starch is from 1.5:1 to 5:1.

4. A shaped food concentrate according to any one of the preceding claims, comprising 0.2-4% by weight gelatinized starch and 0.5-10% by weight water wherein gelatinized starch and water form a dispersed phase.

5. A food concentrate according to any one of the preceding claims, further comprising 5-50% by weight of taste imparting ingredients and fillers.

6. A food concentrate according to claim 5, wherein the taste imparting ingredients comprise, in percentage by weight of the total concentrate:
a. 1-12% by weight of solid fat
b. 0.1-7% by weight of herbs and spices
c. 0.1-8% by weight of animal or liquid fat
d. 0.1-5% by weight of flavours
e. 0.1-5% by weight of meat powders & extracts
f. 1-15% by weight of fillers and other starches

7. A shaped food concentrate according to any one of claims 5 or 6, comprising 0.1-6% by weight liquid fat.

8. A process for preparation of the shaped food concentrate according to any one of the preceding claims, comprising the steps of:
a. mixing 35-85 parts weight crystalline ingredients composed of at least one of salt, monosodium glutamate and sugar with 0-12 parts solid fat to prepare a premix;
b. alternatively
i. adding 0.2-10 parts by weight gelatinized starch to 0.2-20 parts by weight water, or
ii. adding 0.2-10 parts of ungelatinized starch to 0.5-20 parts water and heating at a temperature above 70°C to prepare a starch gel and cool the gel;
c. optionally subjecting the starch gel to a further step of mixing to optimize the texture for further processing;
d. mixing the premix with the starch gel to obtain a mixture; and
e. shaping the mixture to obtain a shaped food concentrate;
wherein the shaping step includes roller compacting of the mixture to obtain pressed cubes or extrusion of the mixture to obtain pasty cubes.

9. A process according to claim 8, wherein the shaping step includes a step of compacting via a rotating cube/tablet press of the mixture to obtain pressed cubes.

## Patentansprüche

1. Geformtes festes Nahrungsmittelkonzentrat, umfassend:
a. 35-85 Gewichts-% kristalline Zutaten, bestehend aus mindestens einem Salz, Mononatriumglutamat und Zucker,
b. 0,1-10 Gewichts-% gelierte Stärke,
c. 0,2-20 Gewichts-% Wasser und
d. 0-50 Gewichts-% geschmacksgebende Komponenten,
wobei das geformte feste Nahrungsmittelkonzentrat in Form eines gepressten Würfels, umfassend 1-6 Gewichts-% festes Fett, oder eines extrudierten oder pastösen Würfels, umfassend 3-12 Gewichts-% festes Fett, vorliegt.

2. Geformtes Nahrungsmittelkonzentrat nach Anspruch 1, umfassend 1-10 Gewichts-% gelierte Stärke und 2-20% Wasser, wobei das Wasser und die gelierte Stärke eine kontinuierliche Phase bilden.

3. Geformtes Nahrungsmittelkonzentrat nach irgendeinem der vorhergehenden Ansprüche, wobei das Verhältnis von Wasser zu gelierter Stärke 1,5:1 bis 5:1 beträgt.

4. Geformtes Nahrungsmittelkonzentrat nach irgendeinem der vorhergehenden Ansprüche, umfassend 0,2-4 Gewichts-% gelierte Stärke und 0,5-10 Gewichts-% Wasser, wobei die gelierte Stärke und das Wasser eine disperse Phase bilden.

5. Nahrungsmittelkonzentrat nach irgendeinem der vorhergehenden Ansprüche, des Weiteren umfassend 5-50 Gewichts-% geschmacksgebende Zutaten und Füllstoffe.

6. Nahrungsmittelkonzentrat nach Anspruch 5, wobei die geschmacksgebenden Zutaten umfassen, in Gewichtsprozent des gesamten Konzentrats:
a. 1-12 Gewichts-% festes Fett,
b. 0,1-7 Gewichts-% Kräuter und Gewürze,
c. 0,1-8 Gewichts-% tierisches oder flüssiges Fett,
d. 0,1-5 Gewichts-% Aromen,
e. 0,1-5 Gewichts-% Fleischpulver und -extrakte,
f. 1-15 Gewichts-% Füllstoffe oder andere Stärken.

7. Geformtes Nahrungsmittelkonzentrat nach irgendeinem der Ansprüche 5 oder 6, umfassend 0,1-6 Gewichts-% flüssiges Fett.

8. Verfahren zur Herstellung eines geformten Nahrungsmittelkonzentrats nach irgendeinem der vorhergehenden Ansprüche, umfassend die Schritte:
a. Mischen von 35-85 Gewichtsteilen kristalliner Zutaten, bestehend aus mindestens einem Salz, Mononatriumglutamat und Zucker, mit 0-12 Teilen festem Fett, um eine Vormischung herzustellen,
b. alternativ
i. Zugeben von 0,2-10 Gewichtsteilen gelierter Stärke zu 0,2-20 Gewichtsteilen Wasser oder
ii. Zugeben von 0,2-10 Teilen ungelierter Stärke zu 0,5-20 Teilen Wasser und Erhitzen auf eine Temperatur oberhalb 70°C, um ein Stärkegel zu erhalten, und Kühlen des Gels,
c. optional Unterwerfen des Stärkegels einem weiteren Schritt des Mischens, um die Textur für eine weitere Verarbeitung zu optimieren,
d. Mischen der Vormischung mit dem Stärkegel, um eine Mischung zu erhalten, und
e. Formen der Mischung, um ein geformtes Nahrungsmittelkonzentrat zu erhalten,
wobei der formende Schritt Walzenkompaktierung der Mischung, um gepresste Würfel zu erhalten, oder Extrusion der Mischung, um pastöse Würfel zu erhalten, einbezieht.

9. Verfahren nach Anspruch 8, wobei der formende Schritt einen Schritt des Kompaktierens über eine rotierende Würfel/Tablettenpresse der Mischung einschließt, um gepresste Würfel zu erhalten.

## Revendications

1. Concentré alimentaire solide façonné comprenant :
a. 35-85 % en masse d'ingrédients cristallins constitués d'au moins un de sel, glutamate de monosodium et sucre ;
b. 0,1-10 % en masse d'amidon gélatinisé ;
c. 0,2-20 % en masse d'eau ; et
d. 0-50 % en masse de constituants communiquant du goût ;
dans lequel le concentré alimentaire solide façonné est dans la forme d'un cube comprimé, comprenant 1-6 % en masse de graisse solide ou d'un cube extrudé ou pâteux comprenant 3-12 % en masse de graisse solide.

2. Concentré alimentaire façonné selon la revendication 1 comprenant 1-10 % en masse d'amidon gélatinisé et 2-20 % d'eau dans lequel l'eau et l'amidon gélatinisé forment une phase continue.

3. Concentré alimentaire façonné selon l'une quelconque des revendications précédentes, dans lequel le rapport d'eau à amidon gélatinisé est de 1,5:1 à 5:1.

4. Concentré alimentaire façonné selon l'une quelconque des revendications précédentes, comprenant 0,2-4 % en masse d'amidon gélatinisé et 0,5-10 % en masse d'eau dans lequel l'amidon gélatinisé et l'eau forment une phase dispersée.

5. Concentré alimentaire selon l'une quelconque des revendications précédentes, comprenant de plus 5-50 % en masse d'ingrédients communiquant du goût et de charges.

6. Concentré alimentaire selon la revendication 5, dans lequel les ingrédients communiquant du goût comprennent, en pourcentage en masse du concentré total :
a. 1-12 % en masse de graisse solide
b. 0,1-7 % en masse d'herbes et d'épices
c. 0,1-8 % en masse de graisse animale ou liquide
d. 0,1-5 % en masse d'arômes
e. 0,1-5 % en masse de poudres & d'extraits de viande
f. 1-15 % en masse de charges et d'autres amidons.

7. Concentré alimentaire façonné selon l'une quelconque des revendications 5 ou 6, comprenant 0,1-6 % en masse de graisse liquide.

8. Procédé pour la préparation du concentré alimentaire façonné selon l'une quelconque des revendications précédentes, comprenant les étapes consistant à :
a. mélanger 35-85 parties en masse d'ingrédients cristallins constitués d'au moins un de sel, glutamate de monosodium et sucre avec 0-12 parties de graisse solide pour préparer un pré-mélange ;
b. alternativement
i. ajouter 0,2-10 parties en masse d'amidon gélatinisé à 0,2-20 parties en masse d'eau, ou
ii. ajouter 0,2-10 parties d'amidon non-gélatinisé à 0,5-20 parties d'eau et chauffer à une température supérieure à 70°C pour préparer un gel d'amidon et refroidir le gel ;
c. éventuellement soumettre le gel d'amidon à une autre étape de mélange pour optimiser la texture pour un traitement supplémentaire ;
d. mélanger le pré-mélange avec le gel d'amidon pour obtenir un mélange ; et
e. façonner le mélange pour obtenir un concentré alimentaire façonné ;
dans lequel l'étape de façonnage comprend un compactage au rouleau du mélange pour obtenir des cubes comprimés ou l'extrusion du mélange pour obtenir des cubes pâteux.

9. Procédé selon la revendication 8, dans lequel l'étape de façonnage comprend une étape de compactage via une compression rotative en cube/comprimé du mélange pour obtenir des cubes comprimés.
